# EUROPEAN PATENT APPLICATION

(11) **EP 4 026 973 A1**
(43) Date of publication of application: **13.07.2022**
(21) Application number: 21150470.9
(22) Date of filing: 07.01.2021
(51) Int. Cl.: E05F 15/40, G01V 8/20

(54) **CONTROL SYSTEM FOR ACCESS POINT DEVICES**

(71) Applicant: CAME S.p.A., 31030 Dosson di Casier (TV) (IT)
(72) Inventor: PASQUETTO, Federico, 30175 Marghera (IT)
(74) Representative: Savi, Massimiliano

(57) **Abstract**

There is described a control system for access point devices, such as gates, doors, movable barriers, and the like, comprising at least one photocell safety device provided with an optical transmitter and an optical receiver, which safety device is adapted to determine when a light beam sent by the optical transmitter to the optical receiver is discontinued due to the presence of an obstacle, and to transmit correspondingly an alarm signal. The safety device is enabled to operate in a different manner in various predefined time frames, which various time frames comprise an operating time frame, in which the transmitter of the photocell safety device is enabled, and a silent time frame, in which the transmitter of the device is disabled so that in the silent period, any signals received by the receiver of the device are due to light sources outside the device and/or breakdowns of the receiver, the status of the receiver of the safety device in the silent time frame being used by electronics to determine a possible malfunction of the safety device.

## Description

### FIELD OF THE INVENTION

The invention relates to the field of the automation of doors, gates, and similar barrier devices conventionally employed to close access points, e.g., access gates to garages or, more generally, to delimited areas.

### BACKGROUND ART

It is customary in control systems for doors, gates, rolling shutters and similar barrier devices, to connect the various units forming the system to a control unit.

In a domestic installation, such units may be, for example a motor for a leaf of a gate, a motor for the other leaf of the gate, a motor for a garage door, a radio receiver for receiving the requests to open/close the gate and the door from a remote control, key selectors and/or control keypads for operating the motors, safety systems, e.g., photocell or sensitive edge safety systems, light- and/or acoustic-signaling devices.

Specifically, the photocell safety devices comprise an optical transmitter and an optical receiver, which are coupled to each other. An alarm signal is triggered when a light beam sent by the optical transmitter to the optical receiver is discontinued due to the presence of an obstacle.

A synchronizing system is required when there are several pairs of photocells, the synchronizing system allowing each receiver in the pair to interpret only the signal originating from the transmitter associated therewith, thus avoiding an erroneous signaling of a safe status.

A manner currently used for preventing interferences between transmitters of a pair with receivers of other pairs is that of providing for each transmitter/receiver pair to be associated with a separate time frame in which only the transmitter of the pair is enabled. Thereby, each receiver receives only in the frame in which only the transmitter associated therewith is enabled to transmit.

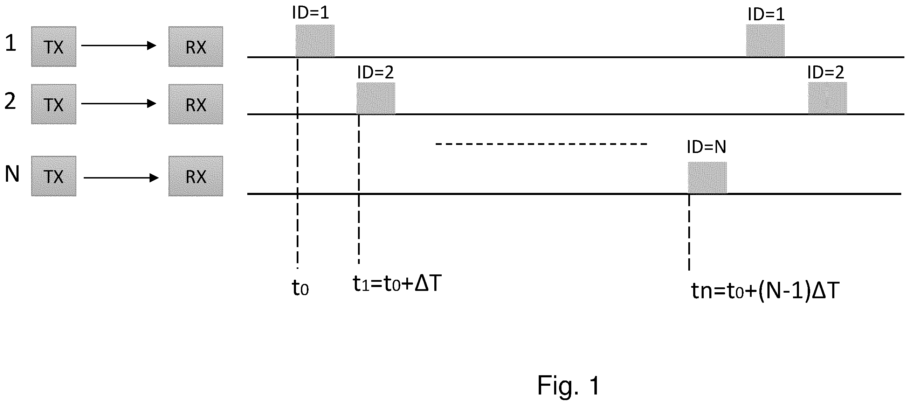

This configuration is diagrammatically indicated in Figure 1. ID identifies the number of each of the N pairs of photocells and ΔT the duration of each time frame. If each of the N frames has a time delay equal to ti=(i-1)ΔT with respect to an initial synchronism signal to, where i indicates the i-nth pair, the result is that when the transmitter of a pair is enabled, the transmitters of the other pairs are turned OFF, thus preventing dangerous interferences.

Although effective, this device is not capable of ensuring a safety level in category 3 according to the classification dictated by Standard UNI EN 954-1. It may indeed occur that a transmitter of a photocell of another automation system, for example of a gate beside that subjected to the installation of interest, such as in the case of semi-detached houses or the solar light itself, reaches one or more receivers in the period in which they are enabled (in jargon, this phenomenon is referred to as photocell blinding) to provide a non-alarm signal also in the presence of an obstacle interposed between the transmitter of the enabled pair and the corresponding receiver.

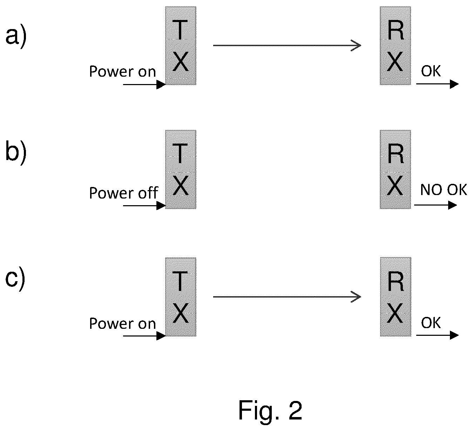

A manner for obviating this drawback may be that of testing the operation of each individual pair before moving a gate or another access barrier to an access point, as diagrammatically shown in Figure 2. The transmitter of each pair is initially turned ON (case a), then turned OFF (case b), to be turned ON again (case c). The device operates correctly if the receiver receives the pulse in the first and third case, but not in the second one.

A similar operation is to be performed for each pair of photocells. This inevitably causes the occurrence of a dead time between driving pulse of the barrier and actual movement thereof due to the standby for all the transmitters to be actually turned OFF and then powered again.

It is the object of the present invention to allow control devices of gates and barriers for access points to operate safely while promptly detecting any malfunctions of the photocell devices belonging to such systems.

### SUMMARY DESCRIPTION OF THE INVENTION

The invention achieves the object by a control system for access point devices, such as gates, doors, movable barriers, and the like, comprising at least one photocell safety device provided with an optical transmitter and an optical receiver, which safety device is adapted to determine when a light beam sent by the optical transmitter to the optical receiver is discontinued due to the presence of an obstacle, and to transmit correspondingly an alarm signal. The safety device is enabled to operate in a different manner in various predefined time frames, which various time frames comprise an operating time frame, in which the transmitter of the photocell safety device is enabled, and a silent time frame, in which the transmitter of the device is disabled so that any signals received by the receiver of the device in the silent period are due to light sources outside the device and/or breakdowns of the receiver. The status of the receiver of the safety device in the silent time frame may thus be used by electronics to determine a possible malfunction of the safety device.

An efficient diagnostic system may be made by virtue of this, with reduced dead times between driving instant and actual movement of the barrier.

The system is particularly advantageous when there is a plurality of photocell safety devices. Here, the operating time frame of one safety device is different from the operating time frame of another device of the plurality, while the silent time frame is common for all the safety devices.

The operating time frames of the safety devices may have different lag and duration. In an embodiment, they have the same duration but different lag with respect to an initial time reference so as not to overlap one another.

The receivers are conventionally always enabled because each receiver is capable of recognizing the beam originating from the transmitter thereof, for example by a coded identification in the transmitted optical signal. It may also be provided for the receivers of each pair to be enabled only in the corresponding operating frame and in the silent frame to reduce the interferences as much as possible.

Practically, the self-diagnosis of the photocell devices occurs continuously by taking advantage of the characteristic operating enabling frames of each device to test the operation of the transmitter (case a) in Fig. 2), while the operation of the receiver and the possible blinding presence thereof by light beams originating from transmitters of other devices or from other elements outside the system is tested in one go during the silent frame (case b) in Fig. 2) in which all the transmitters are turned OFF.

The system is particularly advantageous when a configuration with communication bus is employed. In this type of systems, there is a control unit interfaced with the communication bus to transmit/receive digital information and a plurality of peripheral units interfaced with the communication bus to transmit/receive digital information to/from the control unit. When the peripheral units comprise at least one photocell safety device, the control unit may be configured to cyclically read the status of the receiver of the safety device in the operating time frame and to determine correspondingly a possible malfunction of the safety device in the silent time frame.

According to an improvement, the control unit may be configured to read the status of the receiver of each photocell safety device in the operating frame and in the silent frame, and to send an alarm signal if no signal originating from the transmitter thereof is detected in the silent frame and/or a signal is detected in the operating frame.

Given that conventionally one of the peripheral units of the automation comprises a motor for moving a gate or a movable barrier, the control unit may be advantageously configured to read the status of the receiver of each photocell safety device in the corresponding operating frame and in the silent frame prior to sending an actuation command to said motor.

According to another aspect, the invention relates to a method for diagnosing photocell safety devices of a control system for access point devices, such as gates, doors, movable barriers, and the like, according to one or more of the preceding claims, which safety devices comprise a transmitter and a corresponding optical receiver, which are coupled, comprising the steps of:
assigning, to each safety device, a different operating time frame which is fixed with respect to a reference time in which the corresponding transmitters are enabled;
assigning a common silent time frame in which the transmitters of all the devices are disabled, while the receivers of all the devices are enabled;
periodically disabling the transmitters of all the safety devices in the silent frame; establishing the malfunction of at least one safety device when a signal originating from at least one safety device is detected during the silent frame.

### BRIEF DESCRIPTION OF THE DRAWINGS

Further objects, features and advantages of the present invention will become more apparent from the following detailed description, given by way of a non-limiting example and shown in the accompanying drawings, in which:
Figure 1 diagrammatically shows the timing of a group of photocell safety devices in an automation system according to the prior art.
Figure 2 shows an enabling sequence of the transmitters/receivers for diagnosing the operation of the photocell devices according to the prior art.
Figure 3 shows an exemplary diagram of an automation system for controlling the movement of a gate or a movable barrier according to an embodiment of the invention.
Figure 4 diagrammatically shows the timing of a group of photocell safety devices in an automation system according to an embodiment of the invention.

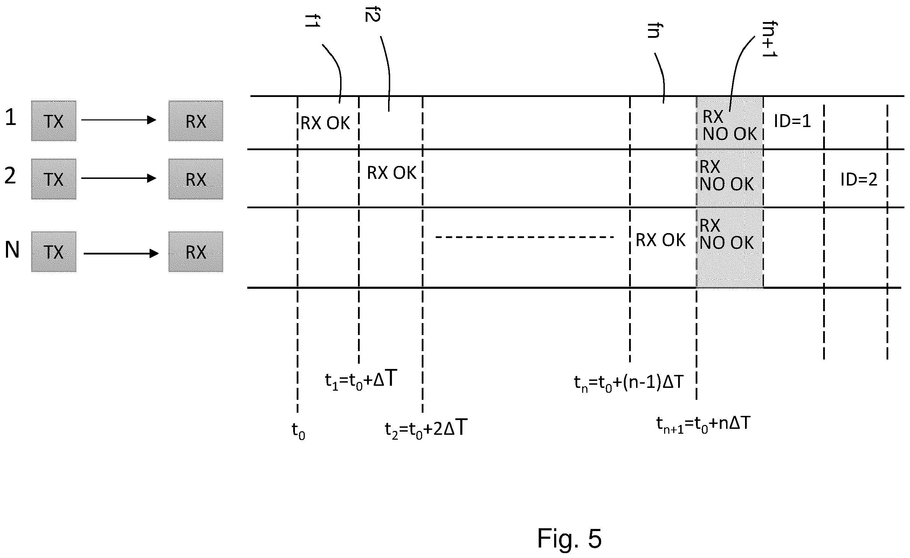

Figure 5 shows the timing of a sequence of tests for self-diagnosing the photocell safety devices in an automation system according to an embodiment of the invention.
Figure 6 shows an exemplary diagram of an automation system for controlling the movement of a gate or a movable barrier according to another embodiment of the invention.

The following description of exemplary embodiments refers to the accompanying drawings. The same reference numerals in the various drawings identify the same or similar elements. The following detailed description does not limit the invention. The scope of the invention is defined by the appended claims.

### DETAILED DESCRIPTION OF THE INVENTION

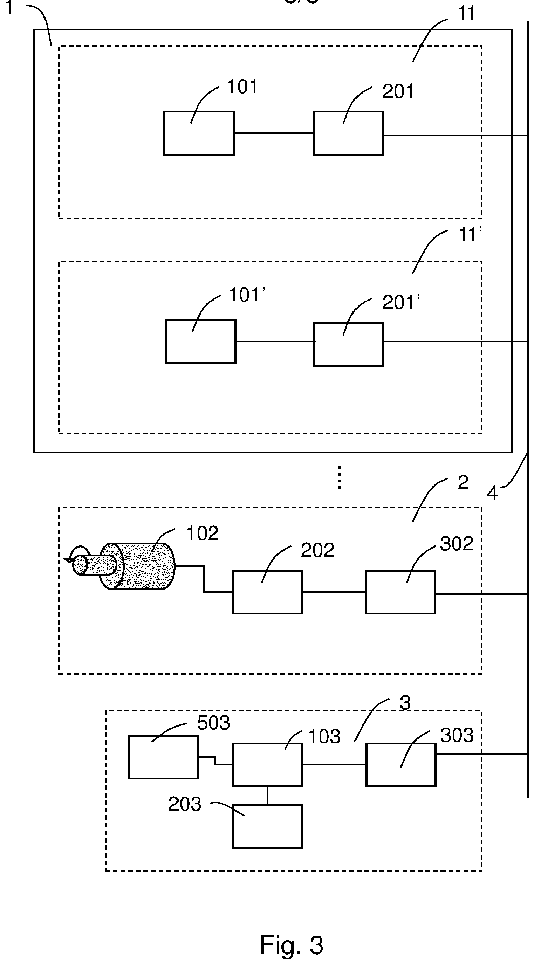

With reference to Figure 3, a system for controlling the movement of a movable barrier, such as a gate, a bar, a door, and the like comprises a bus 4 to which a barrier opening/closing movement module 2, a central control module 3, and a photocell safety device 1 are connected.

The photocell device 1 comprises an optical transmitter 101 and a corresponding optical receiver 101' coupled so that receiver 101' is capable of detecting when the light beam emitted by transmitter 101 does not reach receiver 101', for example due to the presence of an obstacle between the two. The photocell devices are used to signal the presence of a vehicle or person in the immediate vicinity of the barrier to allow the system to act safely. The optical transmitter 101 and the optical receiver 101' conventionally belong to separate devices 11, 11', each having interface electronics 201, 201' towards bus 4.

The movement module 2 comprises a motor 102, a motor control device 202, and a port 302 for receiving a barrier movement command via bus 4.

The central control module 3 comprises a central unit 103, an input 203, and an interface port 303 towards bus 4.

The central unit 103 is configured to read barrier movement commands from input 203 and to send correspondingly actuation signals to the motor control device 202 via bus 4, as well as to read the status of the photocell safety device 1 to promptly discontinue the movement of the barrier if, for example the presence is detected of a vehicle obscuring the passage of the light beam from the photo-transmitter 101 to the photo-receiver 101'.

The communication system 4 may advantageously be a bus communication system with a master/slave type protocol, with the central unit 103 being the master, the motor control device 2, and the photocell devices 11, 11' being corresponding slaves which receive commands from, and send statuses to, said master. There may be further slave devices interfaced with the bus such as, for example further photocell safety devices, sensitive edge safety devices, foot-operated presence detectors, radar presence detectors, signaling devices and other typical devices of this type of systems. The same input 203 of the central unit 3 may be supported or replaced by a slave type input device interfaced with the central unit 3 via bus 4, e.g., a key selector switch, a control keypad, a remote control receiver and similar devices.

The bus system may advantageously exploit the communication by means of two electrical wires alone according to the teachings of document US 7091687.

An interference may occur between transmitter 101 of one device and receiver 101' and another device when there are multiple photocell devices 1. To obviate this, it is sufficient to enable the operation of the transmitter of each device in different operating time frames, as indicated in the introduction with reference to Figure 1.

On the other hand, the cross-interference is not the only phenomenon to which the safety devices in automation systems for access points are subject. An example is a possible hardware malfunction on the receiver whereby the logic always generates an output signal, or it never generates one, or a hardware malfunction on the transmitter whereby it continuously transmits the light beam or does not transmit at all.

Other phenomena which may cause an erroneous operation are those referred to as of environmental type involving blinding of the receiver of a photocell safety device, for example due to the sunlight or other light sources which are received by the optics of the receiver as a correct signal, sources of electromagnetic noise which generate a false signal in the receiver, optical signals originating from automations located nearby.

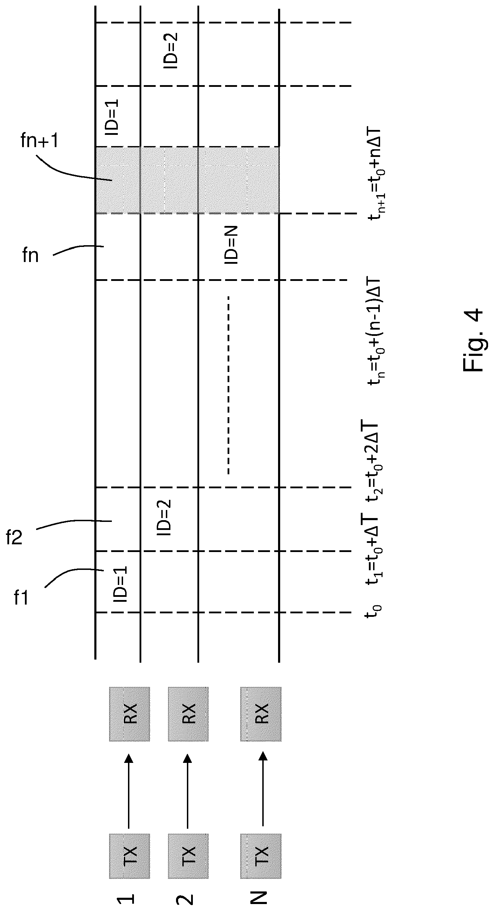

In order to obviate these drawbacks and make the system safer, the inventors decided to modify the known systems, which provide assigning different operating frames (f1, f2, fn) in which only one safety device at a time is enabled, while introducing a further frame (fn +1), referred to as silent frame, in which the transmitters of all the devices are disabled while the receivers of all devices are enabled, as shown in Figure 4.

Practically, the timing in Figure 1 is changed by introducing an (n+1)-nth frame with entirely different operation from that of the other frames. Indeed, the transmitter of the i-nth device is enabled and those of all the others are disabled in the i-nth frame associated with the i-nth photocell device (indicated by ID in the drawing), while the transmitters of all the n devices are disabled in the silent time frame.

Thereby, any signals received in the silent frame are necessarily to be due to interfering light sources outside the device and/or to malfunctions of the receiver.

If the control unit 103 is configured to cyclically read the status of the receiver or of the safety devices 1 in the silent time frame fn +1, an effective operating test may be carried out, which may possibly be followed by the enabling of an alarm or the locking of the actuation systems of the automation motors 102.

The apparent advantage is that the diagnostics system is integrated in the automation system, thus introducing a dead time equal only to the amplitude of a time frame ΔT as though there practically were an n+1-nth photocell device.

By combining the information originating from the time frames associated with each device and that originating from the silent frame associated with all the devices, it may be established whether the devices operate correctly and, contrarily, if the problem is caused by a blinding or by a malfunction of the transmitter and/or the receiver of each pair, generating a suitable coded error code, for example by the signaling device of the automation or stored on a storage element for reading during technical service or for remote sending.

For example, a lack of signal received in the frame assigned to a device may imply a malfunction of the transmitter or a malfunction of the receiver; the presence of the signal detected in the silent frame may indicate an interference or the breakdown of the receiver; the absence of the signal in the silent frame may indicate that the device operates correctly, but also that there is a malfunction in the receiver. Therefore, the device operates correctly if the signal is received in the assigned frame and there is no signal in the silent frame for a photocell device. If the signal is received both in the characteristic frame of the device and in the silent one, then there is an interference. If the signal is not received in the characteristic frame, then there is a malfunction in the transmitter or the receiver or there is an obstacle between transmitter and receiver.

Therefore, a diagnosis may be carried out of all the photocell devices of a system during the normal operation thereof with the employment of a single additional time frame alone, and therefore with a dead time equal to ΔT.

In order for the central unit 3 to be capable of establishing the time frames associated with each safety device 1, it is provided to store the number of the photocell safety devices, the related operating frame with respect to a reference and the silent frame, in a storage element 503 associated with the central unit 3 during the configuration of the system.

Alternatively, it may be provided for each pair of photocells to have a different identification. Given this identification and the maximum number of devices managed, the system is capable of automatically defining the silent time frame.

The invention also relates to a method for diagnosing photocell safety devices of a control system for access point devices, such as gates, doors, movable barriers, and the like, of the type described above, which method provides:
assigning, to each device, an enabling operating time frame which is fixed with respect to a reference time in which the corresponding transmitters are enabled;
assigning a common silent time frame in which the transmitters of all the devices are disabled, while the receivers of all the devices are enabled;
periodically disabling the transmitters of all the safety devices in the silent frame; establishing the malfunction of at least one safety device when a signal originating from at least one safety device is detected during the silent frame.

Advantageously, there may be the step of reading the status of the receiver of each photocell safety device in the corresponding operating frame and in the silent frame to carry out a diagnosis of the safety devices of the system prior to sending an actuation command to a motor for moving a gate or a movable barrier of the system.

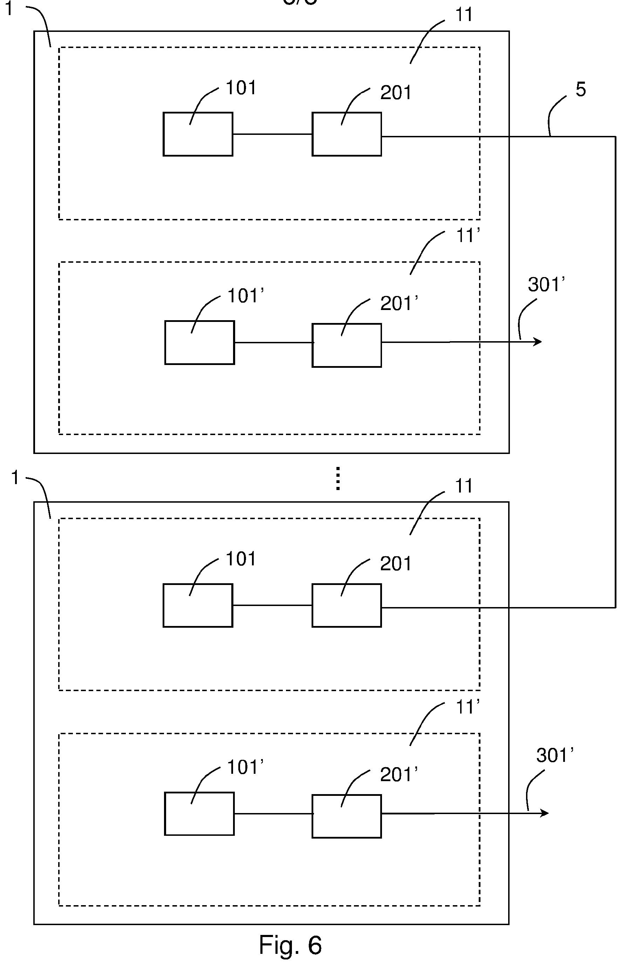

Obviously, the invention is not to be intended as limited to the above-described embodiment, i.e., to a bus configuration with control unit. It may also be applied to simpler systems in which the transmitters 101 of the safety devices 1 receive a synchronism signal, for example by means of an electric conductor 5, so as to be enabled in sequence in consecutive time frames. Once the transmission cycle by all the transmitters 101 is complete, prior to restarting the sequence, the invention provides introducing a further standby time in which none of the transmitters is enabled to transmit, thus generating the silent frame fn +1. The signaling of an alarm or a malfunction is entrusted to the electronics of the individual receiver 201' which may operate independently of the rest of the system, as shown in Figure 6.

Each transmitter/receiver pair 11, 11' is identified with a unique code which transmitter 101 introduces into the transmitted signal in the form of coded pulses so that the corresponding receiver 101', provided with suitable electronics 201', is capable of recognizing the light signal originating from transmitter 101 thereof, and sending correspondingly an alarm signal 301' when this is discontinued by an obstacle.

Hybrid configurations may also exist, in which the transmitters in a bus system are driven by the control unit while the receivers operate independently, as in the case of the system in Figure 6, regardless of whether the status of the receivers is read and/or processed by the control unit, or configurations in which the receiver of each safety device is turned OFF in the operating frames of the other devices so as to increase the safety level of the system and/or make the coded transmission of the light beam unnecessary.

All the above without departing from the guiding principle described above and claimed hereinafter.

## Claims

1. A control system for access point devices, such as gates, doors, movable barriers, and the like, comprising at least one photocell safety device (1) provided with an optical transmitter (101) and an optical receiver (101'), which safety device (1) is adapted to determine when a light beam sent by the optical transmitter (101) to the optical receiver (101') is discontinued due to the presence of an obstacle, and to transmit correspondingly an alarm signal, **characterized in that** the safety device (1) is enabled to operate in a different manner in various predefined time frames, which various time frames comprise an operating time frame (f1, f2, fn) wherein the transmitter (101) of the photocell safety device (1) is enabled, and a silent time frame (fn + 1) wherein the transmitter (101) of the device (1) is disabled so that any signals received by the receiver (101') of the device (1) in the silent period are due to light sources outside the device and/or breakdowns of the receiver, the status of the receiver (101') of the safety device (1) in the silent time frame (fn +1) being used by electronics (201', 3) to determine a possible malfunction of the safety device (1).

2. A system according to claim 1, comprising a plurality of photocell safety devices (1), each associated with an operating time frame (f1, f2, fn), wherein the operating time frame of one safety device is different from the operating time frame of another device of the plurality, while the silent time frame (fn +1) is common for all the safety devices (1).

3. A system according to claim 1 or 2, wherein the operating time frames (f1, f2, fn) of the safety devices (1) have the same duration but different lag with respect to an initial time reference so as not to overlap one another.

4. A system according to one or more of the preceding claims, wherein the silent time frame (fn +1) has the same duration as the operating time frames (f1, f2, fn) but different lag so as not to overlap with any of the operating time frames.

5. A system according to one or more of the preceding claims, wherein the electronics (201', 3) are configured to determine the malfunction of a safety device if a signal is detected in the silent time frame (fn +1).

6. A system according to one or more of the preceding claims, wherein the electronics (201', 3) are configured to determine the type of a malfunction of a safety device by analyzing the status of the receiver (101') of the safety device (1) in the operating time frame (f1, f2, fn) of the device and in the silent time frame (fn +1).

7. A system according to one or more of the preceding claims, wherein in order to detect a malfunction, the electronics (201', 3) are integrated in or in any case associated with the receivers (101') of the safety devices (1).

8. A system according to one or more of the preceding claims, wherein the transmitters (101) are configured to transmit light beams comprising light pulses in sequence with different coding for each transmitter so that each receiver (101') of the pair is capable of establishing whether the light beam received belongs to the corresponding transmitter (101).

9. A system according to one or more of the preceding claims, comprising:
a communication bus (4);
a control unit (3) interfaced to the communication bus (4) to transmit/receive digital information;
a plurality of peripheral units (1, 2) interfaced to the communication bus (4) to transmit/receive digital information to/from the control unit (3), which peripheral units comprise at least one photocell safety device (1), the control unit (3) being configured to cyclically read the status of the receiver (101') of the safety device (1) in the operating time frame (f1, f2, fn) and in the silent time frame (fn +1) to determine correspondingly a possible malfunction of the safety device (1).

10. A system according to claim 9, wherein the control unit (3) is configured to read the status of the receiver (101') of each photocell safety device (1) in the silent frame (fn +1) and to send an alarm signal if at least one signal is detected.

11. A system according to claim 9 or 10, wherein one of the peripheral units comprises a motor (102) for moving a gate or a movable barrier, the control unit (3) being configured to read the status of the receiver (101') of each photocell safety device (1) in the corresponding operating frame (f1, f2, fn) and in the silent frame (fn +1) prior to sending an actuation command to said motor (102).

12. A method for diagnosing photocell safety devices (1) of a control system for access points, such as gates, doors, movable barriers, and the like, according to one or more of the preceding claims, which safety devices (1) comprise an optical transmitter (101) and a corresponding optical receiver (101'), which are coupled,
**characterized in that** it comprises the steps of:
assigning, to each safety device (1), a different operating time frame (f1, f2, fn) which is fixed with respect to a reference time wherein the corresponding transmitters (101) are enabled;
assigning a common silent time frame (fn +1) wherein the transmitters of all the devices are disabled:
periodically disabling the transmitters (101) of all the safety devices (1) in the silent frame (fn + 1);
establishing the malfunction of at least one safety device (1) when a signal originating from at least one safety device is detected during the silent frame (fn +1).

13. A method according to claim 12, wherein there is provided, prior to or after the step of disabling the transmitters (101) of all the safety devices (1) in the silent frame (fn +1), the step of enabling the transmitters (101) of each safety device (1) in the corresponding operating frame (f1, f2, fn) and determining the malfunction or the presence of an obstacle between transmitter and receiver of a device (1) if no signal is detected in said operating frame (f1, f2, fn).

14. A method according to claim 12 or 13, comprising the step of providing an alarm indication when at least one signal is received during the silent frame (fn +1).

15. A method according to one or more of preceding claims 12 to 14, wherein prior to sending an actuation command to a motor (102) to move a gate or a movable barrier of the system, the step is provided of reading the status of the receiver (101') of each photocell safety device (1) in the corresponding operating frame (f1, f2, fn) and in the silent frame (fn +1) to carry out a diagnosis of the safety devices of the system.
